Europäisches Patentamt

European Patent Office

Office européen des brevets

(19)

(11) Publication number: **0 121 735**
**A1**

## EUROPEAN PATENT APPLICATION

(12)

(21) Application number: **84102205.6**

(22) Date of filing: **02.03.84**

(51) Int. Cl.³: **C 10 G 35/09, B 01 J 21/04**

(30) Priority: **16.03.83 US 475793**

(43) Date of publication of application: **17.10.84**
**Bulletin 84/42**

(84) Designated Contracting States: **BE DE FR GB IT NL SE**

(71) Applicant: **AMERICAN CYANAMID COMPANY, 1937 West Main Street P.O. Box 60, Stamford Connecticut 06904 (US)**

(72) Inventor: **Berets, Donald Joseph, 33 Arrow Head Drive, Stamford Connecticut 06903 (US)**
Inventor: **Fetchin, John Allan, 307 Prospect Avenue Apt. 9A, Hackensack New Jersey 07601 (US)**

(74) Representative: **Wächtershäuser, Günter, Dr., Tal 29, D-8000 München 2 (DE)**

(54) **Reforming catalysts having support prepared from rehydratable alumina.**

(57) Reforming catalysts of Pt-Re are prepared on supports made from modified rehydrated alumina. The support material has been leached to extract metal impurities, particularly sodium. Activity of the new catalysts compare favorably with commercial catalysts made on supports of high purity alumina.

EP 0 121 735 A1

## REFORMING CATALYSTS HAVING SUPPORT PREPARED FROM REHYDRATABLE ALUMINA

The invention relates to improvements in catalysts for petroleum refining and more particularly noble metal catalysts useful in catalytic reforming of naphtha or other refinery feedstocks.

Platinum (Pt), platinum-rhenium (Pt-Re) and other bimetallic and trimetallic reforming catalysts are known and have been used in the industry for many years. Those catalysts comprise catalytic platinum and may also contain rhenium, iridium, or other compounds and preferably also chloride compounds. The noble metals are present in concentration generally under 1% on alumina supports, preferably on supports of high purity alumina.

The presence of certain metal impurities in most alumina catalyst supports had been found to interfere with the catalytic activity and/or regenerability of the mono and multimetallic reforming catalysts. This led to the general requirement that alumina supports to be used in making Pt containing reforming catalysts must be made from high purity sources such as Catapal alumina or alumina prepared from very high purity aluminum metal, e.g. 99.99% pure aluminum. The preparation of high purity alumina is costly but it is required by users of noble metal reforming catalysts. The requirement for sodium content in such catalysts, for example, is usually about 200 ppm or less.

We have now found that a less expensive source of alumina can be made suitable for preparation of alumina supports for reforming catalysts and that Pt-Re catalysts made on these supports have catalytic activity for reforming petroleum hydrocarbons that compares favorably with activity of similar catalysts which have been made on conventional, more expensive, high purity alumina supports.

The alumina supports that we use are prepared from a rehydratable alumina made from aluminum trihydrate, e.g. bauxite ore concentrate (BOC). The BOC has been flash calcined to partially dehydrate the alumina trihydrate. Preparation of rehydratable alumina from alumina trihydrate is known and has been described, for example, in U.S. Patents Nos. 3,222,129 and 4,166,100 and 4,120,942. Starting with a partially dehydrated, rehydratable alumina powder we may then prepare catalyst supports of desired shapes by a variety of conventional methods. The dehydrated alumina is at least partially rehydrated in the process of making the support.

Sodium content of rehydrated alumina which has been made from commercial BOC is typically in the range from 2500 to 5000 ppm. Normally, alumina having such a high level of impurity would be totally unsuitable for reforming catalyst applications. However, by application of strenuous washing methods, catalyst supports from rehydratable alumina may be modified to bring sodium and other metal impurities to acceptable low levels. Such impurities can for example, be reduced by treatment of the alumina with an acid solution at elevated temperature to solubilize metal impurities. The alumina may then be thoroughly washed with water to leach the soluble metal compounds from the alumina. By these methods the sodium content can be reduced to less than 400 ppm Na and preferably to 200 ppm Na or less. These supports are then suitable for use in making Pt-Re and other noble metal-containing reforming catalysts.

Methods for making catalyst supports from rehydratable alumina have been described in several patents. We refer to U.S. Patents Nos. 4,120,826 and 4,120,942 for detailed description of such methods. Catalysts made on such rehydratable alumina supports have been used, or described for use, in several catalytic processes. Such catalysts have been described, for example, for use in catalytic processes for hydrogen treatment of petroleum distillates and distillation residues to remove sulfur and nitrogen compounds from the oils. The catalytic metals in those catalysts were metals from Group VI B and Group VIII of the periodic table, usually molybdenum with cobalt or nickel. Catalysts on supports made from rehydratable alumina have also been disclosed and employed commercially to control automobile exhaust emission pollutants. However, in none of the foregoing applications is there a requirement for such high purity supports as exists for reforming. The purity specifications for reforming are such that normally the soda content of rehydratable alumina would have eliminated it from consideration.

In the following examples, Pt-Re reforming catalysts are described which have been prepared on bead and extrudate supports made from rehydrated alumina which has been prepared from flash-calcined bauxite ore concentrate and modified to reduce sodium content. While the examples describe Pt-Re catalysts, the supports also will be suitable for Pt alone or for Pt-Ir and other bimetallic or trimetallic catalysts for use as reforming catalysts.

### EXAMPLE 1

Spherical bead catalyst supports were prepared by pan granulation of rehydratable alumina powder. The powder had been prepared by flash-calcining bauxite ore concentrate. The powder was placed in the rotating, tilted pan of a pan granulator and a fine mist of water was sprayed over the powder. Beads of the wet powder which formed in the rotating pan were removed, steamed in a covered tray for 3-4 hours to complete the rehydration of the alumina, and then dried in air for about two days. A fraction of the beads having diameters from about 1 to 2 mm was separated by screening and calcined in a muffle furnace at 1100°F for one hour.

A sample of the calcined beads weighing 850 g. was washed twice in 1200 ml of 1% by wt. acetic acid aqueous solution, heated to boiling, and the beads were then washed twice in 1200 ml boiling water rinses. After drying, the beads were recalcined at 1030°F for one hour.

A solution containing 0.75 parts by wt. of platinum as chloroplatinic acid, 0.75 parts by wt. of rhenium as perrhenic acid, 6.4 parts by wt. of concentrated HCl and 5.3 parts by wt. concentrated $HNO_3$ in 600 parts by wt. water was circulated through a bed of 250 parts of the washed and calcined beads for 3 hours at room temperature. The resulting impregnated beads were removed, dried at 250°F and calcined for one hour at 1025°F.

Analysis of the finished impregnated beads showed the catalyst contained (by wt.).

<div style="text-align:center">

0.308% Pt

0.275% Re

0.78 Cl

265 ppm Fe

365 ppm Na

</div>

A second sample was prepared the same as described above except the acid wash of the calcined beads was carried out using hot 5% nitric acid aqueous solutions instead of acetic acid. Analysis of the finished catalyst prepared by this method contained:

<div style="text-align:center">

0.286% Pt

0.274% Re

1.06% Cl

288 ppm Fe

212 ppm Na

</div>

### EXAMPLE 2

Trilobal shaped extruded catalyst supports were prepared by slurrying rehydratable alumina powder in water to make a 25% by wt. solids slurry. One percent by wt. gluconic acid was added and the slurry was heated to 95% $\pm$ 5°C for 90 minutes. The slurry was filtered and the solids were washed with water then partially dried to about 45% solids. The partially dried alumina was mulled with addition of 3% by wt. nitric acid aqueous solution to make a paste of suitable consistency for extrusion. The mulled paste was extruded through dies to make extrudate particles of nominal 1.2 millimeter diameter and 3-5 millimeters length. The extrudate particles were dried and calcined at 1100°F for one hour.

The calcined particles were soaked for one hour in boiling 1% acetic acid aqueous solution, separated and then washed by slurrying in six consecutive hot water rinses for one half hour each rinse. The washed extrudates were dried at 250°F then calcined at 1250°F for one hour. The calcined particles were impregnated, dried and calcined by the same procedure described in Example 1.

The impregnated extrudate catalyst was analyzed and found to contain, by wt,

$$0.321\% \quad Pt$$
$$0.288\% \quad Re$$
$$0.74\% \quad Cl$$
$$158 \quad ppm \quad Fe$$
$$106 \quad ppm \quad Na$$

EXAMPLE 3

The catalysts prepared in Examples 1 and 2 were tested in a conventional pilot scale hydrogen reforming reactor. Each catalyst was loaded into a 1" diameter packed bed reactor where it was first reduced with $H_2$ at 100 psig pressure and then presulfided with dimethylsulfide in a naphtha feedstock.

The naphtha feedstock had the following properties:

$$43.8\% \quad parafins$$
$$40.6\% \quad naphthene \ (N)$$
$$13.7\% \quad aromatics \ (A)$$
$$N + 2A = 68.0\%$$
$$Initial \ Boiling \ Point, \ 237°F$$
$$50\% \ Boiling \ Point, \quad 283°F$$
$$End \ Point, \quad\quad\quad\quad 387°F$$

After reduction and presulfiding of the catalyst, the reactor was operated continuously by feeding the same naphtha feedstock with hydrogen continuously through the packed reactor at liquid hourly space velocity about 2.4 and hydrogen to hydrocarbon ratio about 3.5. Each reforming run was started on stream at the initial operating temperature shown in Table 1 and the temperature was increased from time to time as the operation continued, to maintain a constant research octane number of the reformed product. The reactors were continuously operated for one hundred hours at 100 psig pressure. In Table 1, for each catalyst tested, the operating temperatures at the start and end of the run are tabulated and the rate of decline of catalytic activity is indicated by the tabulated average hourly temperature increase required to maintain constant octane rating for the product.

Also shown in Table 1 for comparison are the results of two tests made under the same conditions using standard commercial Pt-Re reforming catalysts, both made to industry specification on supports of high purity alumina prepared from 99.99% pure aluminum and containing less than 100 ppm sodium.

0121735

## TABLE 1

### CATALYST ACTIVITY EVALUATION

| Catalyst | Start of Run | End of Run | Decline Rate |
|---|---|---|---|
| | °F | °F | °F/hr. |
| Example 2 Extrudate | 900 | 952 | 0.52 |
| Example 1 Beads (Acetic Acid Wash) | 895 | 936 | 0.41 |
| Example 1 Beads (Nitric Acid Wash) | 872 | 900 | 0.28 |
| Standard Catalyst I | 930 | 981 | 0.45 |
| Standard Catalyst II | 930 | 957 | 0.25 |

- 8 -

0121735

The results shown in Table 1 demonstrate that the catalysts on rehydrated alumina supports compare favorably with conventional catalysts which have comparable metals loading which are made on supports of high purity alumina. It was unexpected to find that the catalysts made on the relatively less refined and less expensive rehydrated alumina supports could yield such favorable results.

WE CLAIM:

1. Alumina supports for noble metal catalysts, said supports consisting essentially of rehydrated alumina containing less than 400 ppm Na.

2. Reforming catalyst comprising noble metal reforming catalyst on rehydrated alumina catalyst supports defined by Claim 1.

3. Reforming catalyst defined by Claim 2 comprising platinum and rhenium metal catalyst on the defined rehydrated alumina catalyst supports.

4. A method of making alumina supports defined by Claim 1, said method comprising rehydrating rehydratable alumina, and treating the rehydrated alumina with acid to reduce the sodium content of the alumina to less than 400 ppm Na and calcining the acid treated alumina.

5. A reforming catalyst defined by Claim 3 comprising platinum, rhenium and chloride on the defined rehydrated alumina supports.

6. A reforming catalyst comprising platinum, rhenium and chloride on rehydrated alumina supports made by the process defined in Claim 4.

7. A reforming catalyst defined by Claim 2 wherein the defined supports are beads of rehydrated alumina.

8. A method defined by Claim 4 wherein the rehydrated alumina is calcined once before it is treated with acid and again after the acid treatment.

European Patent
Office

**EUROPEAN SEARCH REPORT**

0121735

Application number

EP 84 10 2205

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | EP-A-0 054 976 (AMERICAN CYANAMID CO.) * Page 1, lines 5-8; page 4, lines 1-11; claim 13; abstract * --- | 1,2,4, 7 | C 10 G 35/09 B 01 J 21/04 |
| A,D | US-A-4 120 826 (AMERICAN CYANAMID CO.) * Column 3, lines 8-22, 37-46, 53-55; claim 1 * --- | 1,4,7 | |
| A | FR-A-2 143 465 (AIR PRODUCTS) * Page 11, lines 1-3, 16-18, 24,25, 27-29 * --- | 8 | |
| A | US-A-4 305 810 (ATLANTIC RICHFIELD CO.) * Claim 1 * ----- | 2,3,5 | |

| | |
|---|---|
| | TECHNICAL FIELDS SEARCHED (Int. Cl. ³) C 10 G B 01 J |

The present search report has been drawn up for all claims

| Place of search THE HAGUE | Date of completion of the search 28-06-1984 | Examiner SALA P.C. |
|---|---|---|